# EUROPEAN PATENT SPECIFICATION

(11) **EP 4 029 104 B1**
(45) Date of publication and mention of the grant of the patent: **25.06.2025**
(21) Application number: 19944916.6
(22) Date of filing: 10.09.2019
(51) Int. Cl.: H02J 7/00, H05K 7/20

(54) **WIRELESS CHARGING TRANSMITTER AND WIRELESS CHARGING SYSTEM**
DRAHTLOSLADESENDER UND DRAHTLOSLADESYSTEM
ÉMETTEUR DE CHARGE SANS FIL ET SYSTÈME DE CHARGE SANS FIL

(43) Date of publication of application: 20.07.2022
(73) Proprietor: Valeo Interior Controls (Shenzhen) Co., Ltd., Shenzhen, Guangdong 518103 (CN)
(72) Inventor: SCHULER, M. Stephane, Shenzhen, Guangdong 518103 (CN)
(74) Representative: Delaval, Guillaume Laurent
(86) International application number: PCT/CN2019/105108
(87) International publication number: WO 2021/046710

(56) References cited:
- WO-A1-2019/085839
- CN-A- 108 551 190
- CN-U- 207 426 771
- CN-U- 208 479 249
- CN-U- 208 479 249
- CN-U- 209 233 494
- US-A1- 2018 224 909
- US-A1- 2019 014 683

## Description

### FIELD OF THE INVENTION

The present disclosure relates to a wireless charging transmitter and to a wireless charging system.

### BACKGROUND OF THE INVENTION

The performance of a wireless charging system comprising e.g. a wireless charging device as a wireless charging transmitter and e.g. a mobile device as a wireless charging receiver can be vastly improved by the integration of a cooling system targeting the charging mobile device receiver. To reduce charging durations the wireless charging market is driven towards higher charging powers, increasing the thermal losses that are in turn affecting the battery charging process. Most of the mobile devices nowadays protect the battery by leveling the charging power as to stabilize the receiver temperature below 40degC. No measure taken to cool the mobile device while charging results in the mobile device lowering the charging power after a few minutes ultimately leading to extended charging durations.

US 2018/224909 A1 and CN 208 479 249 U respectively disclose a cooling facility arranged within a wireless charger. The wireless charger comprises an outlet nozzle which is arranged along the blowing duct and has at least one outlet opening leading out of the wireless charging transmitter. In order to cool the wireless charger, air is blown through the blowing duct.

### SUMMARY OF THE INVENTION

It is an object of the invention to propose a wireless charging transmitter which is simple in design and is able to cool a mobile device and the wireless charging transmitter effectively. It is a further object of the invention to provide a wireless charging transmitter with compact dimensions. Additionally it is an object of the invention to provide a wireless charging system that, for a given charging power, ensure the shortest charging duration. The present invention provides a wireless charging transmitter according to claim 1 and a wireless charging system according to claim 6.

According to the invention a wireless charging transmitter comprises a charging surface mat comprising a plurality of air flow openings, at least one support arranged on or alongside the charging surface mat in order to keep a charging mobile device at a distance to the charging surface mat, a wireless charging antenna construction comprising one or more transmission coils, an electric fan, a PCBA with electronics for controlling a charging process and a cooling process, a suction duct which is created between the charging surface mat and the wireless charging antenna construction, a blowing duct which is created between the wireless charging antenna construction and the PCBA, a connection chamber which connects the suction duct and the blowing duct, wherein the electric fan is arranged within the connecting chamber and divides the connection chamber, wherein while the electric fan is running: air flows from a surrounding of the wireless charging transmitter through the openings of the charging surface mat into the suction duct, to the connection chamber, through the fan and through the blowing duct and out of the wireless charging transmitter. Such a wireless charging transmitter is able to cool a mobile device which is set on top of the wireless charging antenna construction using air surrounding the charging device by creating an airflow sucking air through the openings of the charging surface mat into the suction duct. By this an airflow cools the mobile device and is subsequently used to cool the charging transmitter. Such a cooling is simple since the mobile device as well as the wireless charging transmitter is cooled by using a single electrical fan. The system circulates air from a vehicle interior around the mobile device and along a backside of the mobile device to the openings of the charging surface mat and streams it through the suction duct and the blowing duct of the wireless charging transmitter. Such a wireless charging transmitter can meet the needs of an efficient mobile device cooling system which allows a high charging power.

According to the invention the wireless charging transmitter comprises an outlet nozzle which is arranged along the blowing duct and has at least one outlet opening leading out of the wireless charging transmitter, wherein the outlet opening is arranged in one of the supports and in a side wall of the wireless charging transmitter or in a bottom wall of the wireless charging transmitter. Since the air is guided away through the wireless charging transmitter a mixing of fresh air and air heated by the mobile device is avoided in order to keep cooling effective.

Additionally the invention provides that the suction duct runs parallel to the blowing duct. Such a design allows compact dimension of the wireless charging transmitter since existing installation space is used for laying the ducts.

The invention provides that a rotation axis of a fan blade of the electric fan runs vertical to a longitudinal axis of the suction duct and runs vertical to a longitudinal axis of the blowing duct and runs vertical to the charging surface mat. Such a design allows compact dimension of the wireless charging transmitter since only low installation height is necessary for the electric fan.

The invention provides that the electric fan is either axial or centrifugal type. Both types of fans are available as costeffective standard component. Centrifugal type fans (blowers) are offering the best performance considering the available volume.

Finally the invention provides that the wireless charging antenna construction is arranged between the charging surface mat and the PCBA. Due to this special arrangement, the wireless charging antenna construction is cooled twice, namely once by the suction duct on the top and once by the blowing duct on the bottom.

The invention provides a wireless charging system which comprises a wireless charging transmitter according to at least one of claims 1 to 5 and a mobile device, wherein the mobile device rests on the wireless charging transmitter at a distance away of the charging surface mat. Such a system allows an effective cooling of the mobile device and components of the wireless charging transmitter by a surrounding air. Such a wireless charging system is able to cool a mobile device and a wireless charging transmitter with the surrounding air by creating an airflow by suction through the openings of the charging surface mat through the suction duct. By this an airflow which cools the mobile device receiver is subsequently used to cool the wireless charging transmitter. Such a cooling is effective since the mobile device as well as the wireless charging transmitter is cooled by using a single electrical fan. Fresh air streams from a vehicle interior around the mobile device and along a backside of the mobile device to the openings of the charging surface mat and streams through the suction duct and the blowing duct of the wireless charging transmitter. Such a wireless charging system can meet the needs of an efficient cooling system for mobile device and wireless charging transmitter. The Combined effect allows efficient cooling a subsequent longer capability of the mobile device to charge at maximum allowed power.

According to the invention a PCBA is a Printed Circuit Board Assembly comprising a PCB namely a Printed Circuit Board and several electronic and/or electrical components.

### BRIEF DESCRIPTION OF THE DRAWINGS

The foregoing and other features and advantages of the present invention will become apparent to those skilled in the art to which the present invention relates upon reading the following description with reference to the accompanying drawing, in which:

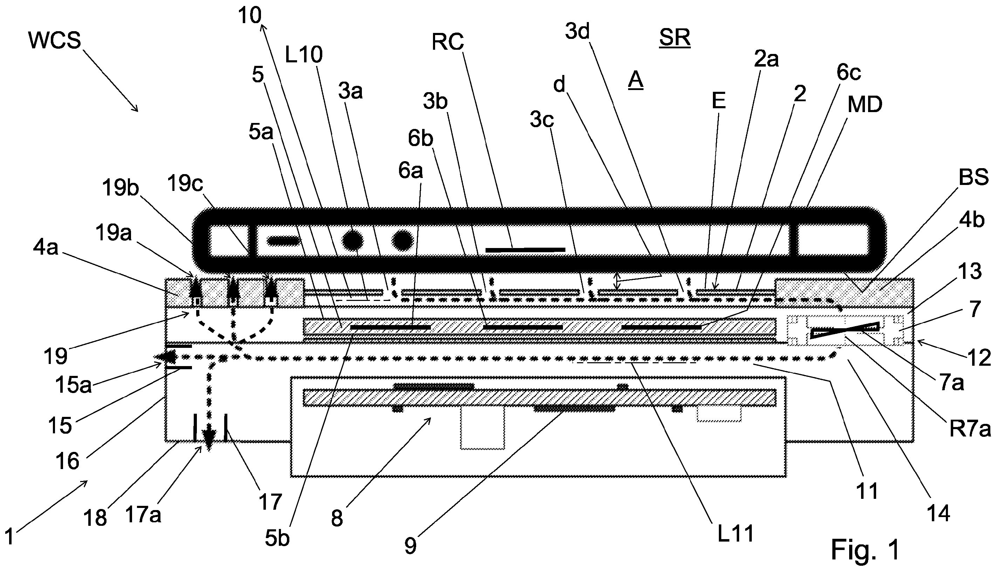

- Figure 1: shows a side view of an embodiment of an inventive wireless charging transmitter and of an inventive wireless charging system.

### DETAILED DESCRIPTION OF THE INVENTION

Figure 1 shows a schematic section view of a first embodiment of an inventive wireless charging transmitter 1. The wireless charging transmitter 1 comprises a charging surface mat 2 comprising a plurality of air flow openings 3a - 3d. The wireless charging transmitter 1 comprises two supports 4a, 4b arranged alongside the charging surface mat 2 in order to keep a charging mobile device MD at a distance d away of the charging surface mat 2. The wireless charging transmitter 1 comprises a wireless charging antenna construction 5 comprising three transmission coils 6a, 6b, 6c. The wireless charging transmitter 1 comprises an electric fan 7. The wireless charging transmitter 1 comprises a PCBA 8 with electronics 9 for controlling a charging process and a cooling process. The wireless charging transmitter 1 comprises one or several suction ducts 10 which is/are created between the charging surface mat 2 and the wireless charging antenna construction 5. The wireless charging transmitter 1 comprises one or more blowing ducts 11 which is/are created between the wireless charging antenna construction 5 and the PCBA 8. The wireless charging transmitter 1 comprises a connection chamber 12 which connects the suction duct 10 and the blowing duct 11. The electric fan 7 is arranged in the connection chamber 12 and separates the connection chamber 12 between an intake suction room 13 and a oulet blower room 14. The intake suction room 13 is connected to the suction duct(s) 10 and the bloerw room 14 is connected to the blowing duct(s) 11. When the electric fan 7 is displacing air A, flows from a surrounding SR of the wireless charging transmitter 1 through the openings 3a - 3d of the charging surface mat 2 into the suction duct(s) 10. This air A streams from the suction duct(s) 10 to the connection chamber 12 and is then blown out by the electric fan 7. Following the air A is expelled from the blower room 14 through the blowing duct(s) 11 and streams then through the blowing duct 11 to exit the wireless charging transmitter 1.

The wireless charging transmitter 1 comprises one or several outlet nozzles 15 which is/are arranged and end of the blowing duct(s) 11 and has/have one or more outlet openings 15a allowing air to escape the wireless charging transmitter 1, wherein the outlet opening(s) 15a is/are arranged in a side wall 16 of the wireless charging transmitter 1.

Figure 1 shows a second outlet nozzle 17 which has an outlet opening 17a leading out of the wireless charging transmitter 1, wherein the outlet opening 17a is arranged in a bottom wall 18 of the wireless charging transmitter 1. This second outlet nozzle is arranged alternatively or cumulatively to the first outlet nozzle 15.

Figure 1 shows a third outlet nozzle 19 which has several outlet opening 19a, 19b, 19c exhausting air out of the wireless charging transmitter 1 on the top side through the mat, wherein the outlet openings 19a, 19b, 19c are arranged in the support 4a of the wireless charging transmitter 1. This third outlet nozzle 19 is arranged alternatively or cumulatively to the first outlet nozzle 15 or to the second outlet nozzle 17 or to the first outlet nozzle 15 and the second outlet nozzle 17.

The suction duct(s) 10 run(s) parallel to the blowing duct(s) 111. A rotation axis R7a of a fan blade 7a the electric fan 7 runs vertical to a longitudinal axis L10 of the suction duct(s) 10, runs vertical to a longitudinal axis L11 of the blowing duct(s) 11 and runs vertical to a plane E defined by a surface 2a of the charging surface mat 2.

The air A which is sucked into the openings 3a - 3d of the charging surface mat 2 streams from the surrounding SR along a backside BS of the mobile device MD and cools the mobile device MD which is heated by the transfer of energy losses from the wireless charging antenna construction 5 and a receiving coil RC which is mounted in the mobile device MD.

The air A which runs through the suction duct(s) 10 and the blowing duct(s) 11 cools the wireless charging antenna construction 5 and the PCBA 8.

The flow of the air within the wireless charging transmitter 1 is indicated by dotted lines.

The wireless charging antenna construction 5 is arranged between the charging surface mat 2 and the PCBA 8. This means that an upper side 5a and a lower side 5b of the wireless charging antenna construction 5 is cooled by the air A flowing in the suction duct(s) 10 and the blowing duct(s) 11 propelled by the electric fan 7.

A wireless charging system WCS comprises the charging transmitter 1 and the mobile device MD, wherein the wireless charging device 1 is suitable to charge a variety of mobile devices.

### REFERENCE NUMERALS:

- 1: wireless charging transmitter
- 2: charging surface mat
- 2a: surface of 2
- 3a - 3d: air flow openings in 2
- 4a, 4b: support
- 5: wireless charging antenna construction
- 5a: upper side of 5
- 5b: lower side of 5
- 6a, 6b, 6c: transmission coil in 5
- 7: electric fan
- 7a: fan blade of 7
- 8: PCBA
- 9: electronics
- 10: suction duct
- 11: blowing duct
- 12: connection chamber
- 13: suction room
- 14: blow room
- 15: first outlet nozzle
- 15a: outlet opening of 15
- 16: side wall 116
- 17: second outlet nozzle
- 17a: outlet opening of 17
- 18: bottom wall
- 19: third outlet nozzle
- 19a, 19b, 19c: outlet opening of 19
- A: air
- BS: backside BS of the mobile device MD
- d: distance between MD and 2
- E: plane defined by a surface 2a of 2
- L10: longitudinal axis 10
- L11: longitudinal axis 11
- MD: mobile device
- RC: receiving coil RC
- R7a: rotation axis of 7a
- SR: surrounding
- WCS: wireless charging system

## Claims

1. Wireless charging transmitter (1) comprising
- a charging surface mat (2) comprising a plurality of air flow openings (3a, 3b, 3c),
- at least one support arranged (4a, 4b) on or alongside the charging surface mat (2) in order to keep a charging mobile device (MD) at a distance (d) away of the charging surface mat (2),
- a wireless charging antenna construction (5) comprising one or more transmission coils (6a, 6b, 6c),
- an electric fan (7),
- a PCBA (8) with electronics (9) for controlling a charging process and a cooling process,
- a suction duct (10) which is created between the charging surface mat (2) and the wireless charging antenna construction (5),
- a blowing duct (11) which is created between the wireless charging antenna construction (5) and the PCBA (8),
- a connection chamber (12) that connects the suction duct (10) and the blowing duct (11),
- wherein the electric fan (7) is arranged within the connection chamber (12) and divides the connection chamber (12),
- wherein while the electric fan (7) is running: air (A) flows from a surrounding (SR) of the wireless charging transmitter (1) through the openings (3a, 3b, 3c) of the charging surface mat (2) into the suction duct (10), to the connection chamber (12), through the fan (7) and through the blowing duct (11) and out of the wireless charging transmitter (1),
- wherein the wireless charging transmitter (1) comprises an outlet nozzle (15; 17; 19) which is arranged along the blowing duct (11) and has at least one outlet opening (15a; 17a; 19a, 19b, 19c) leading out of the wireless charging transmitter (1), wherein the outlet opening (15a; 17a; 19a, 19b, 19c) is arranged in one of the supports (4a, 4b) and at least in a side wall (16) of the wireless charging transmitter (1) or in a bottom wall (18) of the wireless charging transmitter (1).

2. Wireless charging transmitter according to claim 1 wherein the suction duct (10) runs parallel to the blowing duct (11).

3. Wireless charging transmitter according to claim 1 or 2 wherein a rotation axis (R7a) of a fan blade (7a) of the electric fan (7) runs vertical to a longitudinal axis (L10) of the suction duct (10) and runs vertical to a longitudinal axis (L11) of the blowing duct (11).

4. Wireless charging transmitter according to claim 1 or 2 or 3 wherein the electric fan (7) is either axial or centrifugal type.

5. Wireless charging transmitter according to claim 1 or 2 or 3 or 4 wherein the wireless charging antenna construction (5) is arranged between the charging surface mat (2) and the PCBA (8).

6. Wireless charging system (WCS) wherein the wireless charging system comprises a wireless charging transmitter (1) according to at least one of claims 1 to 5 and mobile device (MD) that rests on the wireless charging transmitter (1) at a distance (d) away of the charging surface mat (2).

## Patentansprüche

1. Drahtloser Ladesender (1), der Folgendes umfasst
- eine Ladeflächenmatte (2), die mehrere Luftströmungsöffnungen (3a, 3b, 3c) umfasst,
- mindestens eine Halterung (4a, 4b), die auf oder neben der Ladeflächenmatte (2) angeordnet ist, um eine ladende mobile Vorrichtung (MD) in einem Abstand (d) von der Ladeflächenmatte (2) entfernt zu halten,
- eine drahtlose Ladeantennenkonstruktion (5), die eine oder mehrere Sendespulen (6a, 6b, 6c) umfasst,
- einen elektrischen Lüfter (7),
- eine PCBA (8) mit Elektronik (9) zur Steuerung eines Ladevorgangs und eines Kühlvorgangs,
- einen Saugkanal (10), der zwischen der Ladeflächenmatte (2) und der drahtlosen Ladeantennenkonstruktion (5) hergestellt ist,
- einen Blaskanal (11), der zwischen der drahtlosen Ladeantennenkonstruktion (5) und der PCBA (8) hergestellt ist,
- eine Verbindungskammer (12), die den Saugkanal (10) und den Blaskanal (11) verbindet,
- wobei der elektrische Lüfter (7) innerhalb der Verbindungskammer (12) angeordnet ist und die Verbindungskammer (12) unterteilt,
- wobei bei laufendem elektrischen Lüfter (7): Luft (A) aus einer Umgebung (SR) des drahtlosen Ladesenders (1) durch die Öffnungen (3a, 3b, 3c) der Ladeflächenmatte (2) in den Saugkanal (10), zur Verbindungskammer (12), durch den Lüfter (7) und durch den Blaskanal (11) und aus dem drahtlosen Ladesender (1) heraus strömt,
- wobei der drahtlose Ladesender (1) eine Auslassdüse (15; 17; 19) umfasst, die entlang des Blaskanals (11) angeordnet ist und mindestens eine Auslassöffnung (15a; 17a; 19a, 19b, 19c) aufweist, die aus dem drahtlosen Ladesender (1) herausführt, wobei die Auslassöffnung (15a; 17a; 19a, 19b, 19c) in einer der Halterungen (4a, 4b) und mindestens in einer Seitenwand (16) des drahtlosen Ladesenders (1) oder in einer unteren Wand (18) des drahtlosen Ladesenders (1) angeordnet ist.

2. Drahtloser Ladesender nach Anspruch 1, wobei der Saugkanal (10) parallel zu dem Blaskanal (11) verläuft.

3. Drahtloser Ladesender nach Anspruch 1 oder 2, wobei eine Drehachse (R7a) eines Lüfterblatts (7a) des elektrischen Lüfters (7) senkrecht zu einer Längsachse (L10) des Saugkanals (10) verläuft und senkrecht zu einer Längsachse (L11) des Blaskanals (11) verläuft.

4. Drahtloser Ladesender nach Anspruch 1 oder 2 oder 3, wobei der elektrische Lüfter (7) entweder vom Axial- oder vom Radialtyp ist.

5. Drahtloser Ladesender nach Anspruch 1 oder 2 oder 3 oder 4, wobei die drahtlose Ladeantennenkonstruktion (5) zwischen der Ladeflächenmatte (2) und der PCBA (8) angeordnet ist.

6. Drahtloses Ladesystem (WCS), wobei das drahtlose Ladesystem einen drahtlosen Ladesender (1) nach mindestens einem der Ansprüche 1 bis 5 und eine mobile Vorrichtung (MD) umfasst, die auf dem drahtlosen Ladesender (1) in einem Abstand (d) von der Ladeflächenmatte (2) entfernt aufliegt.

## Revendications

1. Émetteur de charge sans fil (1) comprenant
- un tapis de surface de charge (2) comprenant une pluralité d'ouvertures d'écoulement d'air (3a, 3b, 3c),
- au moins un support agencé (4a, 4b) sur le, ou le long du, tapis de surface de charge (2) afin de maintenir un dispositif mobile de charge (MD) à une distance (d) à l'écart du tapis de surface de charge (2),
- une construction d'antenne de charge sans fil (5) comprenant une ou plusieurs bobines de transmission (6a, 6b, 6c),
- un ventilateur électrique (7),
- un PCBA (8) avec de l'électronique (9) pour commander un processus de charge et un processus de refroidissement,
- un conduit d'aspiration (10) qui est créé entre le tapis de surface de charge (2) et la construction d'antenne de charge sans fil (5),
- un conduit de soufflage (11) qui est créé entre la construction d'antenne de charge sans fil (5) et le PCBA (8),
- une chambre de liaison (12) reliant le conduit d'aspiration (10) et le conduit de soufflage (11),
- le ventilateur électrique (7) étant agencé à l'intérieur de la chambre de liaison (12) et divisant la chambre de liaison (12),
- tandis que le ventilateur électrique (7) est en marche : de l'air (A) s'écoulant depuis un environnement (SR) de l'émetteur de charge sans fil (1) à travers les ouvertures (3a, 3b, 3c) du tapis de surface de charge (2) jusque dans le conduit d'aspiration (10), vers la chambre de liaison (12), à travers le ventilateur (7) et à travers le conduit de soufflage (11) et hors de l'émetteur de charge sans fil (1),
- l'émetteur de charge sans fil (1) comprenant une buse de sortie (15 ; 17 ; 19) qui est agencée le long du conduit de soufflage (11) et a au moins une ouverture de sortie (15a ; 17a ; 19a, 19b, 19c) sortant de l'émetteur de charge sans fil (1), l'ouverture de sortie (15a ; 17a ; 19a, 19b, 19c) étant agencée dans l'un des supports (4a, 4b) et au moins dans une paroi latérale (16) de l'émetteur de charge sans fil (1) ou dans une paroi inférieure (18) de l'émetteur de charge sans fil (1).

2. Émetteur de charge sans fil selon la revendication 1 dans lequel le conduit d'aspiration (10) s'étend parallèlement au conduit de soufflage (11).

3. Émetteur de charge sans fil selon la revendication 1 ou la revendication 2 dans lequel un axe de rotation (R7a) d'une pale de ventilateur (7a) du ventilateur électrique (7) s'étend verticalement par rapport à un axe longitudinal (L10) du conduit d'aspiration (10) et s'étend verticalement par rapport à un axe longitudinal (L11) du conduit de soufflage (11).

4. Émetteur de charge sans fil selon la revendication 1 ou la revendication 2 ou la revendication 3 dans lequel le ventilateur électrique (7) est de type axial ou centrifuge.

5. Émetteur de charge sans fil selon la revendication 1 ou la revendication 2 ou la revendication 3 ou la revendication 4 dans lequel la construction d'antenne de charge sans fil (5) est agencée entre le tapis de surface de charge (2) et le PCBA (8).

6. Système de charge sans fil (WCS) dans lequel le système de charge sans fil comprend un émetteur de charge sans fil (1) selon au moins l'une des revendications 1 à 5 et un dispositif mobile (MD) qui repose sur l'émetteur de charge sans fil (1) à une distance (d) à l'écart du tapis de surface de charge (2).
